# EUROPÄISCHE PATENTSCHRIFT

(11) **EP 1 194 687 B1**
(45) Veröffentlichungstag und Bekanntmachung des Hinweises auf die Patenterteilung: **08.09.2004**
(21) Anmeldenummer: 00952854.8
(22) Anmeldetag: 10.06.2000
(51) Int. Cl.: F02D 41/34, F02P 7/067

(54) **VERFAHREN ZUR KORREKTUR EINES WINKELFEHLERS EINES ABSOLUTWINKELGEBERS**
METHOD FOR CORRECTING AN ANGLE ERROR OF AN ABSOLUTE ANGLE SENSOR
PROCEDE DE CORRECTION D'UNE ERREUR ANGULAIRE D'UN CAPTEUR D'ANGLE ABSOLU

(30) Priorität: 15.06.1999 DE 19927191
(43) Veröffentlichungstag der Anmeldung: 10.04.2002
(73) Patentinhaber: ROBERT BOSCH GMBH, 70442 Stuttgart (DE)
(72) Erfinder: LEHNER, Michael, D-75417 Muehlacker (DE); PFENDER, Andreas, D-74232 Abstatt (DE)
(86) Internationale Anmeldenummer: PCT/DE2000/001914
(87) Internationale Veröffentlichungsnummer: WO 2000/077374

(56) Entgegenhaltungen:
- EP-A- 0 497 237
- DE-A- 19 750 024
- US-A- 3 830 207
- US-A- 5 117 681
- US-A- 5 671 145

## Beschreibung

### Stand der Technik

Die Erfindung betrifft ein Verfahren nach dem Oberbegriff des Anspruchs 1 zur Korrektur eines Winkelfehlers eines Absolutwinkelgebers, welcher die Winkelstellung einer ersten Welle erfaßt, deren Drehbewegung mit einer zweiten Welle verknüpft ist.

Ein derartiges Verfahren findet insbesondere Anwendung bei der Erfassung des Drehwinkels der Nockenwelle einer Brennkraftmaschine. Es wird daher nachfolgend beispielhaft im Zusammenhang mit einem Verbrennungsmotor beschrieben.

Um den Anforderungen an die Funktionalität moderner Motorsteuerungen gerecht zu werden, muß die Drehzahl und die Winkelstellung von Kurbel- und Nockenwelle jederzeit hochgenau erfaßt werden. Zur Drehzahlerfassung an der Kurbelwelle ist es bekannt, eine Geberscheibe mit sechzig minus zwei Winkelmarken einzusetzen, welche mit der Kurbelwelle rotiert und von einem Sensor abgetastet wird. Als Sensor wird regelmäßig ein Sensor verwendet, welcher unter Ausnutzung des Induktiv-, Magnetoresistiv- oder Halleffekts arbeitet.

Damit ausreichende Informationen über das aktuelle Arbeitsspiel zu Motors erhalten werden können, muß zusätzlich die absolute Nockenwellen-Stellung ermittelt werden.

In heutigen Motorsteuerungssystemen werden die Nockenwellen-Stellungen segmentweise erfaßt. Dabei wird eine Scheibe, die mit der Nockenwelle rotiert und beispielsweise vier Winkelmarken aufweist, mit Hilfe eines Sensors abgetastet. Dieser Sensor gibt ein Ausgangssignal ab, das mehrmals pro Nockenwellenumdrehung einen Pegelwechsel aufweist. Hierdurch erhält man eine aktuelle winkelgenaue Information über die Nockenwellenstellung immer an den Segmentgrenzen, also an den Stellen, an denen Pegelwechsel im Nockenwellensensorsignal auftreten. In den Winkelstellungen zwischen den Segmentgrenzen steht eine absolute winkelgenaue Information bezüglich der Nockenwellen-Stellung nicht zur Verfügung.

Mit einer kontinuierlichen Drehwinkelerfassung an der Nockenwelle kann eine Verbesserung des Motorsystems erzielt werden, da im Steuergerät zu jedem Zeitpunkt die aktuelle Winkelinformation zur Verfügung steht. Damit kann die Funktionalität bestehender Motorsteuerungsfunktionen verbessert werden und es lassen sich gegebenenfalls zusätzliche Funktionen realisieren.

Mit einer kontinuierlichen Drehwinkelerfassung an der Nockenwelle läßt sich beispielsweise eine schnelle Diagnose des Drehzahlsgebers durchführen oder es ist durch Überprüfung der Plausibilität des Signals eine einfache und schnelle Diagnose des Absolutwinkelgebers selbst möglich. Weiterhin lassen sich sichere und einfache Starterkennungen durchführen. Das Abwürgen des Motors sowie eine Unterdrehzahl lassen sich sicher erkennen, eine Drehrichtungserkennung wird möglich und eine schnellere Synchronisation der Schnellstartvorgänge ist realisierbar.
Des weiteren ist ein besserer Drehzahlgebernotlauf durchführbar und ein Direktstart des Motors ist nur unter Verwendung eines Absolutwinkelgebers möglich.

Aus der DE 197 22 016 A1 ist ein Absolutwinkelgeber bekannt, mit dem die Winkelstellung der Nockenwelle jederzeit ermittelbar ist. Bei dem bekannten Absolutwinkelgeber wird eine Kombination des hall- und magnetoresistiven Effekts ausgenutzt. Hierzu werden bei dem bekannten Absolutwinkelgeber zwei Sensorelemente eingesetzt, wobei eines nach dem Hallprinzip und eines nach dem magnetoresistiven Prinzip arbeitet. Die von den beiden Sensorelementen abgegebenen Signale werden miteinander kombiniert.

Mit dem bekannten Absolutwinkelgeber läßt sich eine Winkelerfassung durchführen, die eine geringe Temperaturabhängigkeit und eine geringe Druckabhängigkeit aufweist und gleichzeitig eine gute Auflösung ermöglicht. Es ist möglich, über einen Winkel von 360 Grad zu messen, so daß der Einsatz bei der absoluten Winkelmessung der Nockenwelle einer Brennkraftmaschine gewährleistet ist.

Wenngleich sich auch mittels des bekannten Absolutwinkelgebers ein Motorsteuersystem aufbauen läßt, welches sich durch einen besseren Schnellstart auszeichnet, wodurch die Batterie, der Starter und die Lichtmaschine weniger belastet werden und daher kleiner dimensioniert werden können, sowie durch zuverlässige Drehrichtungserkennung das Vermeiden von Saugrohrpatschern ermöglicht wird, wodurch beispielsweise das Saugrohr und die Drosselklappe des Motors mit geringeren Anforderungen spezifiziert werden können, so hat der bekannte Absolutwinkelgeber doch den Nachteil, daß die von ihm geforderte Genauigkeit, den Winkel der Nockenwelle mit einem Fehler von kleiner als etwa ein bis zwei Grad Nockenwelle zu erfassen, nur schwer erfüllt werden kann. Dies hängt im wesentlichen von der mechanischen Einbautoleranz des Gebers, der mechanischen Einbautoleranz des Magneten, der Inhomogenität des Magnetfeldes, der Unrundheiten der Nockenwelle und elektrischer und mechanischer Toleranzen innerhalb des Sensorelementes zusammen.

Aus der DE 197 50 024 A1 ist ein Verfahren zur Adaption von Anbautoleranzen eines Geberrades bekannt, bei dem zunächst die Ist-Differenz zwischen einer Winkelstellung wenigstens einer Markierung des Geberrades und einer Winkelstellung wenigstens einer Markierung eines mit einer zweiten Welle verbundenen Referenzgeberrades ermittelt wird, die Ist-Differenz der Winkelstellung mit einer Soll-Differenz verglichen wird und die Abweichung zwischen der Ist-Differenz und der Soll-Differenz als Anbaufehler des Geberrades gespeichert wird. Das Geberrad kann mit einer Nockenwelle und das Referenzgeberrad mit der Kurbelwelle einer Brennkraftmaschine verbunden sein.

Wenngleich auch bei dem bekannten Verfahren ein aufgrund eines nicht exakten Anbaues eines Geberrades auftretender Fehler korrigierbar ist, so ist es mittels des bekannten Verfahrens nicht möglich, Fehler zu korrigieren, welche aufgrund einer Vielzahl miteinander verknüpften auf einen Absolutwinkelgeber einwirkenden Einflüssen auftreten. Insbesondere ist es mittels des bekannten Verfahrens nicht möglich, einen Fehler zu korrigieren, welcher unabhängig von dem mittels des bekannten Verfahrens korrigierbaren Anbaufehler auftritt, wobei die fehlerhafte Abweichung positiv oder negativ sein kann.

Es ist Aufgabe der Erfindung, ein Eingangs genanntes Verfahren derart auszubilden, daß der Winkelfehler eines Absolutwinkelgebers nahezu vollständig kompensiert wird, wobei die Kompensation in jeder Stellung und über eine vollständige Umdrehung der ersten Welle erfolgt und alle Fehlereinflußgrößen berücksichtigt werden.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

### Vorteile der Erfindung

Gemäß der Erfindung wird zunächst während wenigstens einer vollständigen Umdrehung der ersten Welle die jeweilige Winkelstellung der zweiten Welle erfaßt, hieraus die entsprechende jeweilige Winkelstellung der ersten Welle ermittelt, der entsprechende jeweilige Ausgangswert des Absolutwinkelgebers mit der entsprechenden jeweiligen Winkelstellung der ersten Welle verglichen und die durch den Vergleich gebildete Differenz gespeichert und dann der entsprechende jeweilige Ausgangswert des Absolutwinkelgebers mit dem gespeicherten Wert korrigiert.

Dadurch, daß zunächst während wenigstens einer vollständigen Umdrehung der ersten Welle die jeweilige Winkelstellung der zweiten Welle erfaßt wird und hieraus die entsprechende jeweilige Winkelstellung der ersten Welle ermittelt wird, können alle während einer vollständigen Umdrehung der ersten Welle auftretenden Fehlereinflüsse ermittelt werden. Das heißt, es kann nicht nur ein fehlerhafter Anbau eines Geberrades an der ersten Welle festgestellt werden sondern darüber hinaus alle anderen bei einem Absolutwinkelgeber gegebenenfalls vorhandenen Toleranzen. Insbesondere lassen sich durch den erfindungsgemäß vorgesehenen Vergleich des entsprechenden jeweiligen Ausgangswerts des Absolutwinkelgebers mit der entsprechenden jeweiligen Winkelstellung der ersten Welle Abweichungen feststellen, welche beispielsweise zu Beginn der Umdrehung der ersten Welle negativ sind und während der Umdrehung der ersten Welle positiv werden.

Erfindungsgemäß wird die durch den jeweiligen Vergleich gebildete Differenz noch gespeichert und dann der entsprechende jeweilige Ausgangswert des Absolutwinkelgebers mit dem jeweiligen gespeicherten Wert korrigiert. Somit kann bereits der Ausgangswert des Absolutwinkelgebers während der zweiten Umdrehung der ersten Welle korrigiert werden. Die gespeicherten Werte können während des Stillstandes des Motors im Speicher verbleiben, so daß bei einem Wiederstart des Motors der Ausgangswert des Absolutwinkelgebers bereits während der ersten Umdrehung der ersten Welle mit den gespeicherten Werten korrigiert werden kann.

Besonders vorteilhaft ist es jedoch, wenn der einer jeweiligen Winkelstellung der ersten Welle zugeordnete Fehler mehrmals, das heißt während neuer Unterbrechungen der ersten Welle erfaßt wird und der entsprechende jeweilige Mittelwert gebildet wird, wobei der Mittelwert gespeichert und zur Korrektur verwendet wird. Durch die Mittelwertbildung werden in vorteilhafter Weise gegebenenfalls auftretende Störspitzen weitestgehend eliminiert. Besonders vorteilhaft ist es jedoch, wenn die den jeweiligen Winkelstellungen zuzuordnende Fehler kontinuierlich, das heißt bei jeder Umdrehung, erfaßt werden.

Eine weitere Verbesserung des erfindungsgemäßen Verfahrens kann dadurch erreicht werden, daß zur Korrektur eines zwischen zwei diskreten Werten liegenden Fehlers ein aus den beiden Werten durch Interpolation ermittelter Wert zur Korrektur verwendet wird. Hierdurch können die Ausgangswerte des Absolutwinkelgebers auch dann korrigiert werden, wenn sich die erste Welle in einer Stellung befindet, in der ein zur Feststellung der Winkelposition der zweiten Welle verwendeter Geber kein Meßsignal abgibt, wie dies der Fall ist, wenn sich der Geber beispielsweise zwischen zwei Zähnen eines Geberrades der zweiten Welle befindet.

### Zeichnung

Weitere Merkmale der vorliegenden Erfindung ergeben sich aus der nachfolgenden Beschreibung eines besonderen Ausführungsbeispiels unter Bezugnahme auf die Zeichnung.

Es zeigt
- Figur 1: eine Blockdarstellung einer Anordnung zur Durchführung des erfindungsgemäßen Verfahrens,
- Figur 2: eine schematische Blockdarstellung des in Figur 1 enthaltenen Mikrokontrollers,
- Figur 3: eine Darstellung des Ausgangssignals eines Absolutwinkelgebers und
- Figur 4: einen dem Signalverlauf der Figur 3 entsprechenden Korrekturwert.

### Beschreibung eines Ausführungsbeispiels

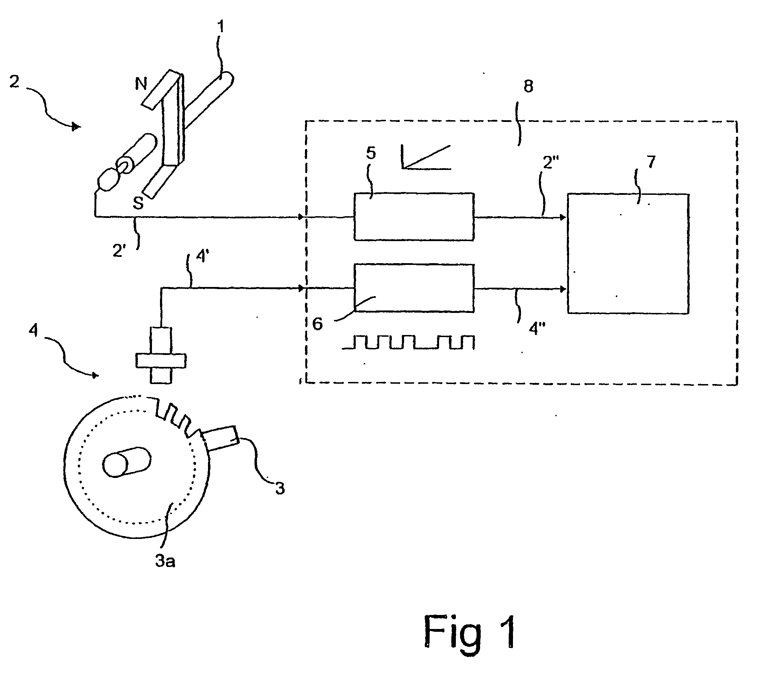

Wie der Figur 1 entnommen werden kann, ist an einer Nockenwelle 1 einer Brennkraftmaschine ein Absolutwinkelgeber 2 angeordnet. An der Kurbelwelle 3 der Brennkraftmaschine ist ein Drehgeber 4 angeordnet. Der Absolutwinkelgeber 2 nutzt eine Kombination des hall- und magentoresistiven Effektes aus. Der Drehgeber 4 ist als herkömmlicher induktiver Sensor ausgebildet, welcher bei jeder Zahnflanke eines mit der Kurbelwelle 3 verbundenen Gebrades 3a ein Signal abgibt.

Das Ausgangssignal 2' des Absolutwinkelgebers 2 wird einer ersten Aufbereitungsschaltung 5 zugeführt. Das Ausgangssignal 4' des Drehgebers 4 wird einer zweiten Aufbereitungsschaltung 6 zugeführt. Das von der ersten Aufbereitungsschaltung 5 abgegebene aufbereitete Signal 2" des Absolutwinkelgebers 2 wird einem Mikrokontolller 7 zugeführt. Das einer zweiten Aufbereitungsschaltung 6 abgegebene aufbereitete Ausgangssignal 4" des Drehgebers 4 wird ebenfalls dem Mikrokontroller 7 zugeführt. Die erste Aufbereitungsschaltung 5, die zweite Aufbereitungsschaltung 6 sowie der Mikrokontoller 7 gehören zu einem Steuergerät 8.

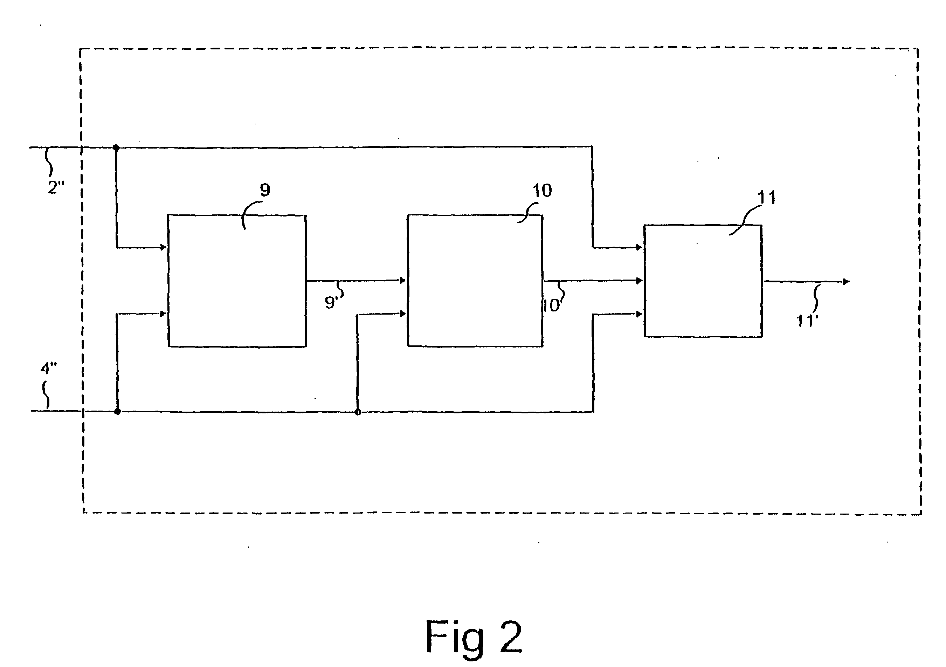

Wie der Figur 2 entnommen werden kann, wird das aufbereitete Ausgangssignal 2" des Absolutwinkelgebers 2 sowie das aufbereitete Ausgangssignal 4" des Drehgebers 4 im Mikrokontroller 7 zunächst die Abweichung des Ausgangssignals des Absolutwinkelgebers 2 von dem betreffenden, ein Refferenzsignal bildenden Ausgangssignal des Drehgebers 4 in einer ersten Stufe 9 gebildet. Das von der ersten Stufe 9 abgegebene Differenzsignal 9' wird einer Speicherstufe 10 zugeführt. Das in der Speicherstufe 10 gespeicherte Korrektursignal 10' wird einer Korrekturstufe 11 zugeführt. Der Korrekturstufe 11 wird ebenfalls das aufbereitete Ausgangssignal 2' des Absolutwinkelgebers 2 zugeführt. In der Korrekturstufe 11 wird das aufbereitete Ausgangssignal 2" des Absolutwinkelgebers 2 um den gespeicherten Korrekturwert 10' korrigiert. Das von der Korrekturstufe 11 abgegebene Ausgangssignal 11' entspricht im wesentlichen der tatsächlichen Winkelstellung der Nockenwelle 1.

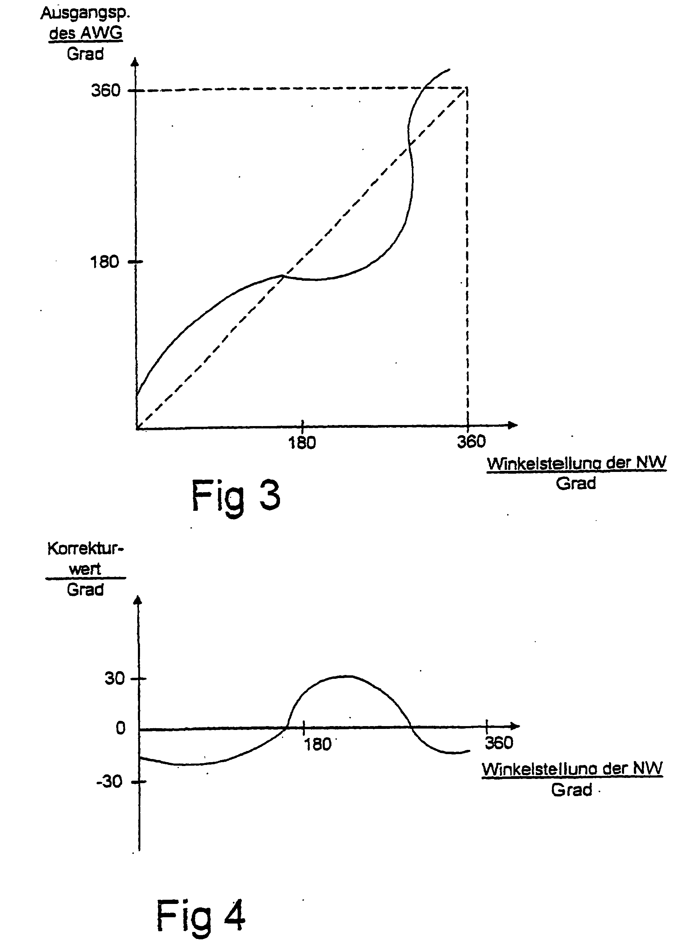

In der Figur 3 ist beispielhaft ein aufbereitetes Ausgangssignal 2" des Absolutwinkelgebers 2 über der tatsächlichen Winkelstellung der Nockenwelle 1 angegeben. Zum Vergleich ist der geforderte Sollwert des Ausgangssignals des Absolutwinkelgebers 2 gestrichelt dargestellt. Wie der Figur 3 entnommen werden kann, beträgt die Abweichung des aufbereiteten Ausgangssignals 2" des Absolutwinkelgebers 2 Anfangs etwa plus 30 Grad. Bei einer Winkelstellung von etwa 150 Grad ist kurzzeitig keine Abweichung vorhanden. Im Bereich von 150 Grad bis etwa 190 Grad ist die Abweichung negativ und erreicht einen Wert von etwa minus 30 Grad. Bei einer Winkelstellung von etwa 290 Grad geht die Abweichung wieder durch den Nullpunkt und wird positiv, wobei sie bei 360 Grad etwa wieder plus 30 Grad beträgt.

Der in der Korrekturstufe 11 gebildete Korrekturwert ist in Figur 4 dargestellt. Er entspricht der Abweichung des Ausgangssignals des Absolutwinkelgebers 2 mit umgekehrten Vorzeichen.

## Patentansprüche

1. Verfahren zur Korrektur eines Winkelfehlers eines Winkelgebers (2), welcher die Winkelstellung einer ersten Welle (1) erfaßt, deren Drehbewegung mit einer zweiten Welle (3) verknüpft ist, **dadurch gekennzeichnet, dass** der Winkelgeber (2) ein Absolutwinkelgeber ist, daß zunächst während wenigstens einer vollständigen Umdrehung der ersten Welle (1) die jeweilige Winkelstellung der zweiten Welle (3) erfaßt wird und aus den erhaltenen Meßwerten die entsprechende jeweilige Winkelstellung der ersten Welle (1) ermittelt wird, dass der entsprechende jeweilige Ausgangswert des Absolutwinkelgebers (2) mit der entsprechenden jeweiligen Winkelstellung der ersten Welle (1) verglichen und die durch den jeweiligen Vergleich gebildete Differenz gespeichert wird; und dann der jeweils zu berechnende entsprechende jeweilige Ausgangswert des Absolutwinkelgebers (2) mit dem .jeweiligen gespeicherten Wert korrigiert wird.

2. Verfahren nach Anspruch 1, **dadurch gekennzeichnet, dass** die jeweiligen Winkelstellungen zugeordnete Fehler mehrmals erfaßt und gemittelt werden, wobei die Mittelwerte gespeichert und zur Korrektur verwendet werden.

3. Verfahren nach Anspruch 2, **dadurch gekennzeichnet, dass** der einer jeweiligen Winkelstellung zugeordnete Fehler kontinuierlich erfaßt wird.

4. Verfahren nach einem der Ansprüche 1 bis 3, **dadurch gekennzeichnet, dass** zur Korrektur eines zwischen zwei diskreten Werten liegenden Fehlers ein aus den beiden Werten durch Interpolation ermittelter Wert zur Korrektur verwendet wird.

## Claims

1. Method for correcting an angle error of an angle sensor (2) which senses the angular position of a first shaft (1) whose rotary movement is linked to a second shaft (3), **characterized in that** the angle sensor (2) is an absolute angle sensor, **in that**, at first during at least one complete rotation of the, first shaft (1), the respective angular position of the second shaft (3) is sensed and the corresponding respective angular position of the first shaft (1) is determined from the measured values obtained, **in that** the corresponding respective starting value of the absolute angle sensor (2) is compared with the corresponding respective angular position of the first shaft (1) and the difference formed by means of the respective comparison is stored, and the corresponding respective starting value of the absolute angle sensor (2) which is to be respectively calculated is then corrected with the respective stored value.

2. Method according to Claim 1, **characterized in that** the errors which are assigned to respective angular positions are sensed repeatedly and averaged, the average values being stored and used for correction.

3. Method according to Claim 2, **characterized in that** the error assigned to a respective angular position is sensed continuously.

4. Method according to one of Claims 1 to 3, **characterized in that**, in order to correct an error lying between two discrete values, a value which is determined from the two values by means of interpolation is used for the correction.

## Revendications

1. Procédé de correction d'une erreur d'angle d'un capteur angulaire (2) qui détecte la position angulaire d'un premier arbre (1) dont le mouvement de rotation est combiné avec un deuxième arbre (3),
**caractérisé en ce que**
le capteur angulaire (2) est un capteur angulaire absolu et dans un premier temps, pendant au moins un tour complet du premier arbre (1), la position angulaire du deuxième arbre (3) est détectée et qu'à partir des valeurs mesurées obtenues, la position angulaire du moment correspondante du premier arbre (1) est déterminée, la valeur de sortie du moment correspondante du capteur angulaire (2) étant comparée avec la position angulaire correspondante du premier arbre (1), et la différence formée par la comparaison est enregistrée puis la valeur de sortie du capteur angulaire absolu (2) correspondante à calculer est corrigée au moyen de la valeur enregistrée.

2. Procédé selon la revendication 1,
**caractérisé en ce que**
l'erreur affectée aux positions angulaires est détectée plusieurs fois et moyennée, les valeurs moyennes étant enregistrées et utilisées pour la correction.

3. Procédé selon la revendication 2,
**caractérisé en ce qu'**
une erreur affectée à une position angulaire du moment est détectée en continu.

4. Procédé selon l'une quelconque des revendications 1 à 3,
**caractérisé en ce que**,
pour la correction d'une erreur située entre deux valeurs discrètes, une valeur déterminée par interpolation à partir des deux valeurs est utilisée pour la correction.
